Europäisches Patentamt

(19) European Patent Office

Office européen des brevets

(11) **EP 0 998 660 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(21) Anmeldenummer: **98934902.2**

(22) Anmeldetag: **27.05.1998**

(51) Int Cl.7: **G01G 1/18**, B04B 3/02

(86) Internationale Anmeldenummer:
**PCT/EP98/03123**

(87) Internationale Veröffentlichungsnummer:
**WO 99/05483 (04.02.1999 Gazette 1999/05)**

(54) **VORRICHTUNG ZUR DURCHFÜHRUNG EINER GEWICHTSMESSUNG BEI ZENTRIFUGEN**

DEVICE FOR CONDUCTING A WEIGHT MEASUREMENT IN CENTRIFUGES

DISPOSITIF POUR REALISER UNE MESURE DE POIDS DANS DES CENTRIFUGEUSES

(84) Benannte Vertragsstaaten:
**CH ES FR GB IE IT LI SE**

(30) Priorität: **25.07.1997 DE 19732006**

(43) Veröffentlichungstag der Anmeldung:
**10.05.2000 Patentblatt 2000/19**

(73) Patentinhaber: **Heinkel Aktiengesellschaft**
**74321 Bietigheim-Bissingen (DE)**

(72) Erfinder: **GERTEIS, Hans**
**D-74321 Bietigheim-Bissingen (DE)**

(74) Vertreter: **Hoeger, Stellrecht & Partner**
**Uhlandstrasse 14 c**
**70182 Stuttgart (DE)**

(56) Entgegenhaltungen:
**WO-A-89/05193**          **WO-A-92/04982**
**DE-C- 4 316 081**        **DE-C- 19 648 511**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Vorrichtung zur Durchführung einer Gewichtsmessung bei Zentrifugen zur Trennung von Suspensionen in ihre festen und flüssigen Bestandteile mit einem Maschinengehäuse, mit einer die Suspension aufnehmenden, im Maschinengehäuse rotierend gelagerten Trommel und mit einem in die Trommel führenden Füllrohr zur Einspeisung der Suspension in die Trommel, wobei das Maschinengehäuse um eine Drehachse schwenkbar gelagert und ein Kraftmeßelement gewichtsabhängige, auf einen unterschiedlichen Füllungsgrad der Trommel mit Suspension oder auf eine unterschiedliche Entfeuchtung der festen Suspensionsbestandteile zurückgehende, um die Drehachse erfolgende Auslenkungen des Maschinengehäuses abfühlt, die auf einer Meßwertanzeige zur Anzeige gelangen.

Eine Vorrichtung dieser Art ist aus DE 43 16 081 C1 bekannt. Im vorderen Teil des Gehäuses kann ein geringer Überdruck erzeugt werden, um den Übertritt von abgetrennter Flüssigkeit in den Feststoffraum zu verhindern. Um beim Austragen von Feststoffen deren Übertritt in den Bereich der Flüssigkeitsabfuhr zu verhindern, kann im vorderen Gehäuseteil ein geringer Unterdruck erzeugt werden. Es ist weiterhin bekannt (WO 89/05193 A1; WO 92/04982 A1), die Trommel der Zentrifuge mit Über- oder Unterdruck zu beaufschlagen, um beispielsweise den Filtrierungsvorgang oder die Trocknung der in Form eines Filterkuchens vorliegenden festen Bestandteile der Suspension zu beeinflussen. Bei Einleitung eines Über- oder Unterdrucks in die Trommel entstehen jedoch naturgemäß Störkräfte, welche die Gewichtsmessung der insoweit wie eine Balkenwaage funktionierenden Zentrifuge verfälschen.

Es ist Aufgabe der Erfindung, eine gattungsgemäße Vorrichtung so zu verbessern, daß auch bei Einleitung eines Über- oder Unterdrucks in die Trommel keine Störung der gewichtsabhängigen Messungen an der Zentrifuge eintreten.

Die Aufgabe wird gemäß Anspruch 1 bei einer gattungsgemäßen Vorrichtung dadurch gelöst, daß eine Leitung zur Erzeugung eines Über- oder Unterdrucks in der Trommel vorgesehen ist, und die Wirkungslinie der in dieser Leitung aufgrund des Über- oder Unterdrucks erzeugten Kraft so geführt ist, daß sie die Drehachse des Maschinengehäuses schneidet.

Gemäß Anspruch 2 erfolgt die Lösung der Aufgabe bei einer gattungsgemäßen Vorrichtung dadurch, daß eine Leitung zur Erzeugung eines Über- oder Unterdrucks in der Trommel vorgesehen ist und ein den Druck in der Trommel abfühlender Sensor die Meßwertanzeige druckabhängig korrigiert.

Ausführungsbeispiele der Erfindung sind in der Zeichnung dargestellt und werden nachstehend näher erläutert. Es zeigt:

Figur 1   eine zur gravimetrischen Bestimmung des Füllgrades geeignete Stülpfilterzentrifuge mit einer Leitung zur Beaufschlagung der Trommel mit Über- oder Unterdruck;

Figur 2   ein erstes Ausführungsbeispiel;

Figur 3   ein gegenüber Figur 2 abgewandeltes Ausführungsbeispiel;

Figur 4   ein auf einem anderen Prinzip beruhendes drittes Ausführungsbeispiel, und

Figur 5   ein gegenüber Figur 4 abgewandeltes Ausführungsbeispiel.

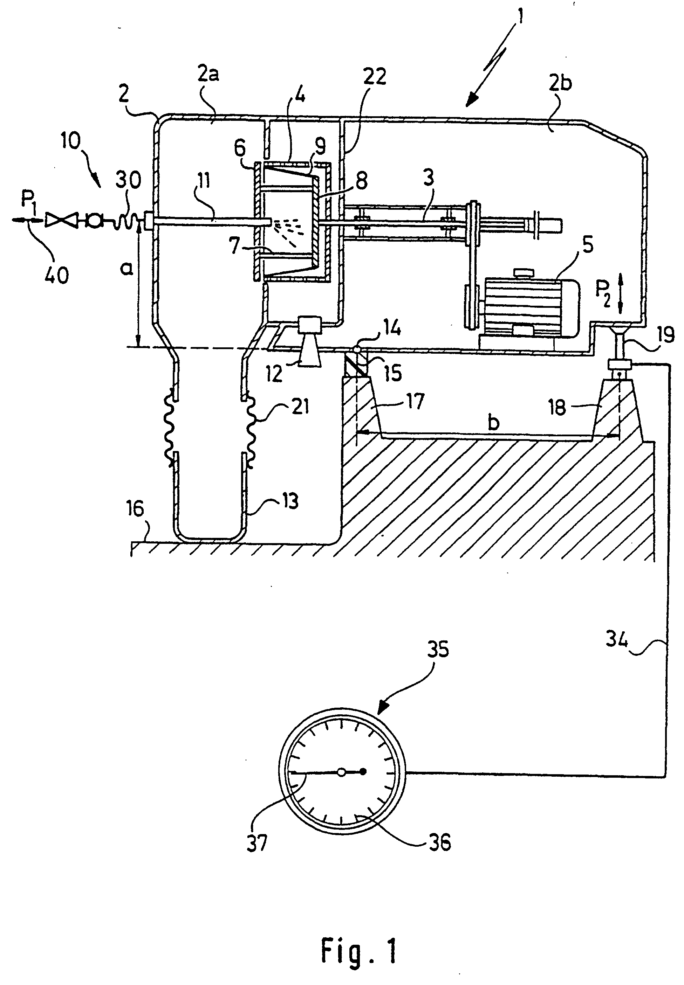

Die in Figur 1 schematisch dargestellte Stülpfilterzentrifuge 1, welche der Verarbeitung von Suspensionen unterschiedlichen Gewichts dient, umfaßt in bekannter Weise eine in einem Maschinengehäuse 2 auf einer Welle 3 drehbar gelagerte Trommel 4, die von einem Antriebsmotor 5 rotierend antreibbar und durch einen axialverschieblichen Deckel 6 verschließbar ist. Mit dem Deckel 6 ist über Streben 7 ein Zwischenboden 8 starr verbunden, der sich zusammen mit dem Deckel 6 verschiebt. Zwischen dem äußeren Rand des Zwischenbodens 8 und dem vorderen, dem Deckel 6 benachbarten Rand der Trommel 4 ist ein leicht konisch verlaufendes Filtertuch 9 angeordnet. Das Gehäuse 2 besteht aus einem vorderen Teil 2a und einem hinteren Teil 2b, die durch eine Trennwand 22 gasdicht voneinander getrennt sind.

In der dargestellten Betriebsstellung der Zentrifuge 1 wird über ein Füllrohr 11 zu filtrierende Substanz, nämlich eine aus Feststoff und Flüssigkeit bestehende Suspension in die Trommel 4 eingefüllt. Aufgrund der Rotation der Trommel 4 sammelt sich der Feststoff auf der Innenseite des Filtertuchs 9 in Form eines sogenannten "Kuchens" an, während die Flüssigkeit nach Durchdringung des Filtertuches 9 durch die perforierte Trommelwand hindurch auf die Außenseite der Trommel 4 gelangt und durch einen Filtratablauf 12 aufgesammelt wird. Um nach abgeschlossener Filtrierung den "Kuchen" vom Filtertuch 9 abzulösen, wird nach Abschaltung der Suspensionszuführung der Deckel 6 und mit ihm der Zwischenboden 8 in Figur 1 nach links verschoben, so daß sich das Filtertuch 9 umstülpt, und der "Kuchen" von dessen Innenseite auf die Außenseite gelangt. Durch Weiterrotieren der Trommel 4 und des ausgestülpten Filtertuchs 9 wird der Kuchen vom Filtertuch 9 in den vorderen Teil 2a des Gehäuses abgeschleudert und fällt in einen abnehmbar angeordneten Behälter 13. Nach dem Abschleudern des Kuchens wird der Deckel 6 wieder geschlossen, so daß die anfängliche Betriebsstellung wieder erreicht ist und über das Füllrohr 11 erneut zu filtrierende Suspension in die Trommel 4 eingebracht werden kann.

Die beschriebene Anordnung einschließlich Gehäuse 2, Trommel 4, Antriebsmotor 5 und Füllrohr 11 ist in sich starr ausgebildet und um eine horizontale Drehachse 14, d.h. in einer vertikalen Ebene, schwenkbar gelagert. Die Drehachse 14 ist ihrerseits auf elastischen Pufferelementen 15 angeordnet, welche auf einem ortsfesten, mit dem Erdboden 16 verbundenen Sockel 17 aufruhen. Die Pufferelemente 15 können beispielsweise übliche Gummi-Metall-Elemente sein und dienen der Absorption und Dämpfung von Schwingungen, welche durch die Rotation der Trommel 4 entstehen können. Die Drehachse 14 kann materiell entfallen, wenn die Pufferelemente 15 selbst gleichzeitig eine Verschwenkung der Anordnung in einer vertikalen Ebene zulassen.

Zwischen dem Gehäuse 2 und einem weiteren ortsfesten Sockel 18 ist ein auf Zug oder Druck beanspruchbares, an sich bekanntes Kraftmeßelement 19, beispielsweise eine Kraftmeßdose, angeordnet. Somit wirkt die ganze Anordnung wie eine Art Balkenwaage: Durch die in die Trommel 4 über das Füllrohr 11 eingeführte Suspension wird die links von der horizontalen Drehachse 14 gelegene Seite der Zentrifuge 1 belastet, wodurch das rechts von der Drehachse 14 gelegene Kraftmeßelement 19 entsprechend beeinflußt wird. Das Kraftmeßelement 19 ist über eine elektrische Leitung 34 mit einer z.B. in Gewichts- oder Füllstandseinheiten geeichten Meßwertanzeige 35 verbunden, die einen über eine Skale 36 spielenden Zeiger 37 umfaßt.

Um die wie eine Balkenwaage funktionierende Zentrifuge 1 zur Vermeidung von Meßfehlern gegenüber der Umgebung zu entkoppeln, ist das Maschinengehäuse 2 mit dem Behälter 13 über eine flexible, gasdichte Kopplungseinrichtung 21, beispielsweise einen Faltenbalg, verbunden, so daß sich die linke Seite der Anordnung frei um die Drehachse 14 verschwenken kann. Auch eine mit dem Füllrohr 11 verbundene Leitung 10 zur Einspeisung der Suspension ist in entsprechender Weise mit einem flexiblen Leitungsstück 30 versehen, um ebenfalls eine störungsfreie Verschwenkung der Anordnung um die Drehachse 14 zu gestatten.

In bestimmten Anwendungsfällen ist es erwünscht, den Filtriervorgang in der Trommel 4 unter Überdruck oder Unterdruck auszuführen. Bei der dargestellten Ausführungsform wird ein solcher Druck über die Leitung 10 und das Füllrohr 11 in dem vom Filtertuch 9 umschlossenen Innenraum der Trommel 4 erzeugt. Durch diesen Druck entsteht naturgemäß eine vom Querschnitt des Füllrohrs 11 abhängige Kraft $P_1$, die wegen der horizontalen Druckeinleitung in Figur 1 ebenfalls horizontal in Richtung des Doppelpfeils 40 wirkt und wegen des Abstandes a des Füllrohrs 11 von der Drehachse 14 ein entsprechendes Drehmoment $P_1$ x a erzeugt, welches je nachdem, ob Über- oder Unterdruck vorliegt, im nach rechts oder nach links gerichteten Drehsinn wirkt. Durch die Kraft $P_1$ wird auf der gegenüberliegenden Seite der Drehachse 14 als Reaktion am Kraftmeßelement 19 ein Drehmoment $P_2$ x b erzeugt, wobei die Beziehung gilt

$$P_1 \text{ x } a = P_2 \text{ x } b \qquad (1)$$

Dabei ist mit b der Hebelarm zwischen der Drehachse 14 und dem Kraftmeßelement bezeichnet.

In dieser Formel wirkt sich die Kraft $P_2$ als eine die Gewichtsmessung verfälschende Störkraft aus. Für diese Störkraft $P_2$ folgt aus obenstehender Formel

$$P_2 = P_1 \text{ x } a/b \qquad (2)$$

Die Störkraft $P_2$ ist also naturgemäß eine unmittelbare Funktion der direkt vom eingeleiteten Über- oder Unterdruck abhängigen Kraft $P_1$, und es geht darum, den Einfluß dieser Störkraft $P_2$ zu beseitigen.

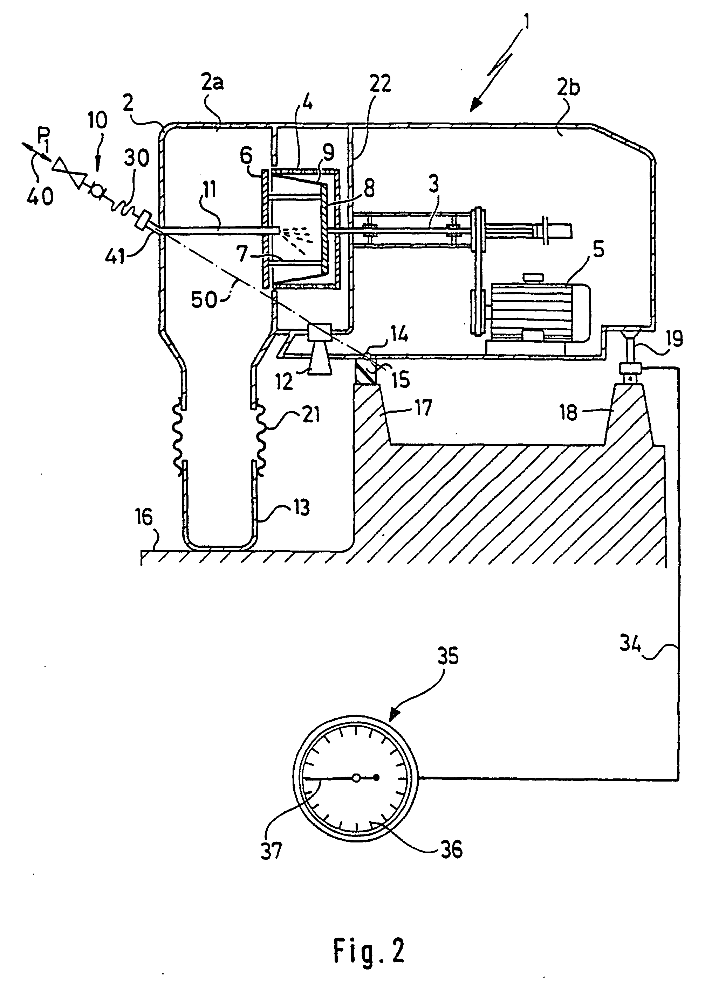

Bei dem in Figur 2 dargestellten Ausführungsbeispiel ist das Füllrohr 11 an seiner Einleitungsstelle in das Maschinengehäuse 2 mit einem Krümmer 41 starr verbunden, der seinerseits an das flexible Leitungsstück 30 der Leitung 10 angeschlossen ist. Der Krümmungswinkel des Krümmers 41 ist so gewählt, daß bei Einleitung eines Über- oder Unterdrucks die in Figur 2 strichpunktiert angegebene Wirkungslinie 50 der hierdurch entstehenden, durch den Doppelpfeil 40 angedeuteten Kraft $P_1$ die Drehachse 14 schneidet. Somit wird der in Figur 1 eingezeichnete Momentarm-Abstand a zu Null, und entsprechend obiger Formel (2) verschwindet damit auch die Störkraft $P_2$, so daß eine unbehinderte Gewichtsmessung erfolgen kann.

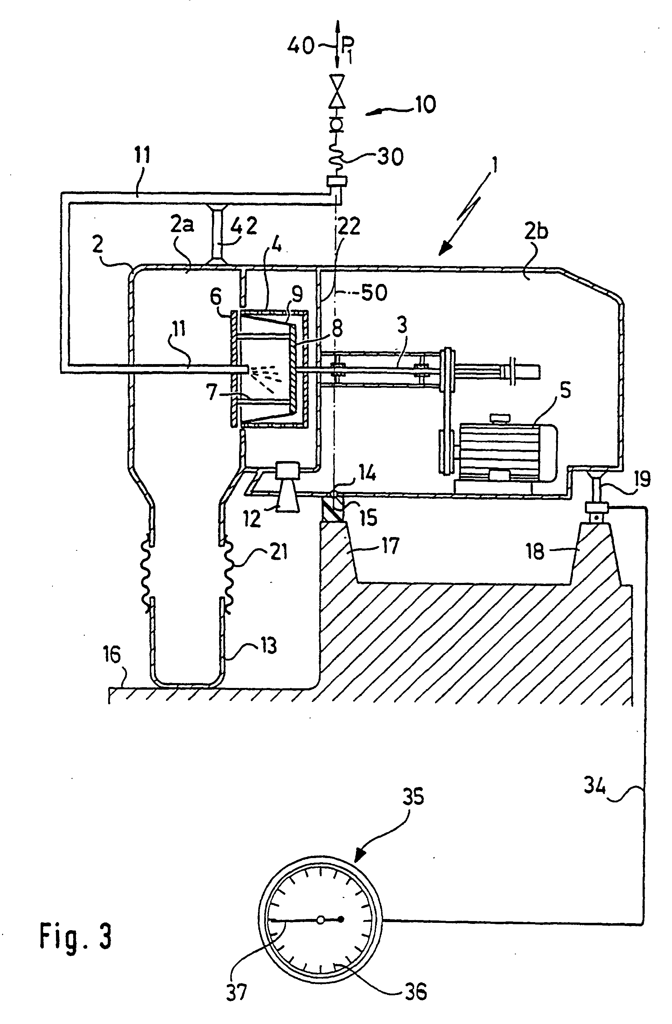

Die Figur 3 zeigt ein gegenüber Figur 2 insoweit abgewandeltes Ausführungsbeispiel, als das Füllrohr 11 verlängert und zweimal rechtwinklig abgeknickt über das Maschinengehäuse 2 geführt ist, auf dem es durch einen Ständer 42 abgestützt ist. Das senkrecht nach oben gekrümmte Ende des Füllrohrs 11, das wiederum über das flexible Leitungsstück 30 mit der Leitung 10 verbunden ist, liegt so, daß seine Achse, wie strichpunktiert angedeutet, die Drehachse 14 schneidet. Entsteht somit bei Einleitung von Über- oder Unterdruck an dem mit dem Leitungsstück 30 verbundenen Ende des Füllrohrs 11 eine in Richtung des Doppelpfeils 40 nach oben oder unten gerichtete Kraft $P_1$, so verläuft deren Wirkungslinie 50 wiederum durch die Drehachse 14, und es entsteht aus den im Zusammenhang mit Figur 2 genannten Gründen keine Störkraft $P_2$.

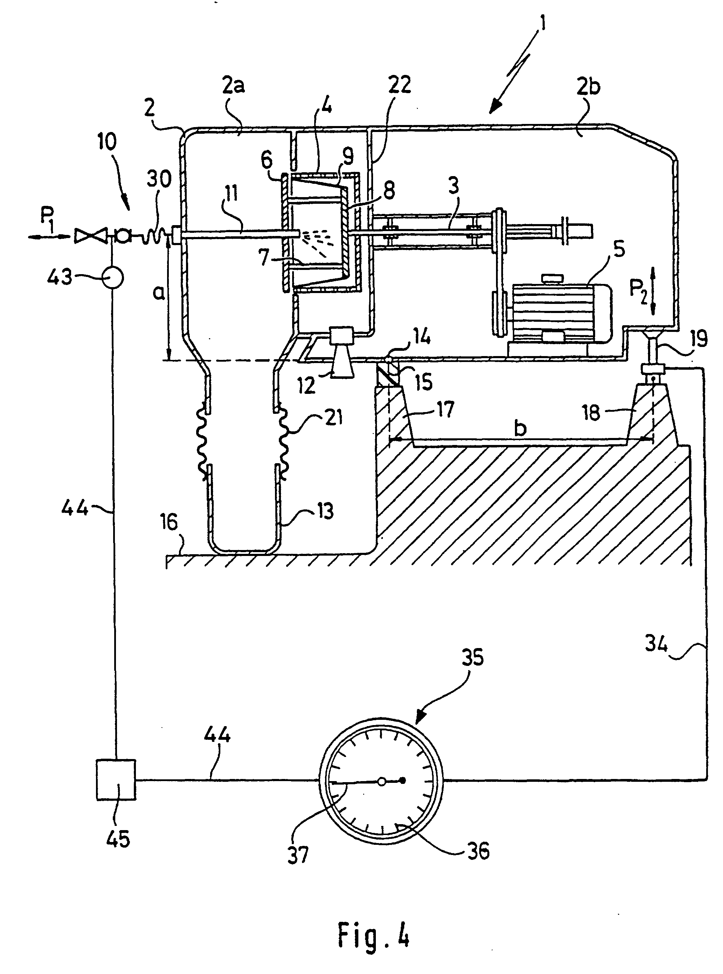

Beim Ausführungsbeispiel nach Figur 4, in welcher einander entsprechende Teile mit den gleichen Bezugszeichen wie in den Figuren 1 bis 3 bezeichnet sind, gilt wiederum wegen der horizontalen Einleitung eines Über- oder Unterdrucks und der hierdurch bedingten Kraft $P_1$ die obige Beziehung (2), nach welcher die Störkraft $P_2$ von der durch den eingeleiteten Über- oder Unterdruck bestimmten Kraft $P_1$ abhängt. Die Kraft $P_1$ hängt aber direkt von dem in der Leitung 10 und damit im Füllrohr 11 und der Trommel 4 herrschenden Druck ab. Dieser Druck wird durch einen Sensor 43 an der Leitung 10 abgefühlt. Bei anderen Ausführungen könnte der Sensor 43 auch am Füllrohr 11 oder an der Trommel 4 angebracht werden. Der Sensor 43 ist mit der Meßwertanzeige 35 durch eine Leitung 44 verbunden, in welcher eine an sich bekannte elektronische Einheit 45 eingeschaltet ist, welche die bei der Ausführungsform gemäß Figur 4 entstehende Störkraft $P_2$ in Abhängigkeit vom herrschenden Über- oder Unterdruck berechnet und die Stellung des Zeigers 37 in Abhängigkeit von dieser Störkraft $P_2$ jeweils entsprechend korrigiert, so daß der Zeiger 37 jeweils den wahren Meßwert (z.B. Gewichts- oder Füllstandseinheiten) anzeigt. Somit ist auch bei der Anordnung gemäß Figur 4 die auf Über- oder Unterdruck in der Trommel 4 herrschende Störkraft $P_2$ kompensiert.

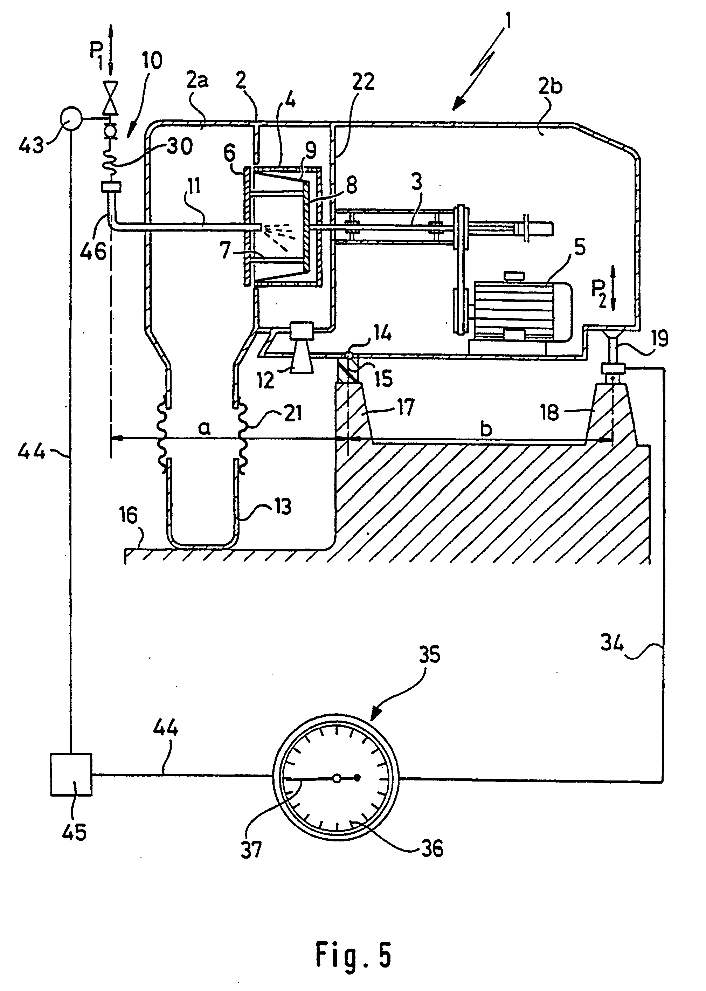

Das Ausführungsbeispiel nach Figur 5 unterscheidet sich von demjenigen nach Figur 4 lediglich dadurch, daß das Füllrohr 11 kein horizontales Endstück, sondern einen vertikal auslaufenden Krümmer 46 besitzt, so daß bei Über- oder Unterdruck die auftretende Kraft $P_1$ vertikal wirkt und mit einem gegenüber Figur 4 anderen Momentarm gemäß Abstand a zur Wirkung gelangt. Auch in diesem Fall ist wiederum an der Leitung 10 ein Sensor 43 angeordnet, der in Verbindung mit der elektronischen Einheit 45, so wie anhand von Figur 4 beschrieben, eine laufende Korrektur der Meßwertanzeige 35 vollzieht, so daß die Störkraft $P_2$ jederzeit kompensiert und eine genaue Ablesung des betreffenden Meßwertes möglich ist.

**Patentansprüche**

1.  Vorrichtung zur Durchführung einer Gewichtsmessung bei Zentrifugen zur Trennung von Suspensionen in ihre festen und flüssigen Bestandteile mit einem Maschinengehäuse, mit einer die Suspension aufnehmenden, im Maschinengehäuse rotierend gelagerten Trommel und mit einem in die Trommel führenden Füllrohr zur Einspeisung der Suspension in die Trommel, wobei das Maschinengehäuse um eine Drehachse schwenkbar gelagert ist und ein Kraftmeßelement gewichtsabhängige, auf einen unterschiedlichen Füllungsgrad der Trommel mit Suspension oder auf eine unterschiedliche Entfeuchtung der festen Suspensionsbestandteile zurückgehende, um die Drehachse erfolgende Auslenkungen des Maschinengehäuses abfühlt, die auf einer Meßwertanzeige zur Anzeige gelangen, **dadurch gekennzeichnet, daß** die Trommel mit einem Deckel verschließbar ist, daß eine Leitung (10, Füllrohr 11) zur Erzeugung eines Über- oder Unterdrucks in der Trommel (4) vorgesehen ist, und die Wirkungslinie (50) der in dieser Leitung (10, Füllrohr 11) aufgrund des Über- oder Unterdrucks erzeugten Kraft ($P_1$) so geführt ist, daß sie die Drehachse (14) des Maschinengehäuses (2) schneidet.

2.  Vorrichtung zur Durchführung einer Gewichtsmessung bei Zentrifugen zur Trennung von Suspensionen in ihre festen und flüssigen Bestandteile mit einem Maschinengehäuse, mit einer die Suspension aufnehmenden, im Maschinengehäuse se rotierend gelagerten Trommel und mit einem in die Trommel führenden Füllrohr zur Einspeisung der Suspension in die Trommel, wobei das Maschinengehäuse um eine Drehachse schwenkbar gelagert ist und ein Kraftmeßelement gewichtsabhängige, auf einen unterschiedlichen Füllungsgrad der Trommel mit Suspension oder auf eine unterschiedliche Entfeuchtung der festen Suspensionsbestandteile zurückgehende, um die Drehachse erfolgende Auslenkungen des Maschinengehäuses abfühlt, die auf einer Meßwertanzeige zur Anzeige gelangen, **dadurch gekennzeichnet, daß** die Trommel mit einem Deckel verschließbar ist, daß eine Leitung (10, Füllrohr 11) zur Erzeugung eines Über- oder Unterdrucks in der Trommel (4) auf der Einspeiseseite der Trommel vorgesehen ist, und ein den Druck in der Trommel (4) einspeiseseitig abfühlender Sensor (43) die Meßwertanzeige (35) druckabhängig korrigiert.

**Claims**

1.  Apparatus for carrying out a weight measurement in centrifuges for separating suspensions into their solid and liquid components, comprising a machine housing, a drum rotatingly mounted in said machine housing and receiving said suspension, and a filler pipe leading into said drum for feeding said suspension into said drum, said machine housing being mounted for pivotal movement about an axis of rotation, and a force measuring element sensing weight-dependent deflections of said machine housing occurring about said axis of rotation and originating from a different degree of filling of said drum with suspension or from a different dehumidification of said solid suspension components, and said machine housing deflections being indicated on a measurement value indicator, **characterized in that** said drum is closable with a lid, **in that** a pipeline (10, filler pipe 11) is provided for generating a positive pressure or a negative pressure in said drum (4), and the line of application (50) of the force ($P_1$) generated in this pipeline (10, filler pipe 11) on account of the positive pressure or the negative pressure is directed so as to intersect said axis of rotation (14) of said machine housing (2).

2.  Apparatus for carrying out a weight measurement in centrifuges for separating suspensions into their solid and liquid components, comprising a machine housing, a drum rotatingly mounted in said machine housing and receiving said suspension, and a filler pipe leading into said drum for feeding said suspension into said drum, said machine housing being mounted for pivotal movement about an axis of rotation, and a force measuring element sensing weight-dependent deflections of said machine housing occurring about said axis of rotation and originating from a different degree of filling of said drum with suspension or from a different dehumidification of said solid suspension components, and said machine housing deflections being indicated on a measurement value indicator, **characterized in that** said drum is closable with a lid, **in that** a pipeline (10, filler pipe 11) is provided for generating a positive pressure or a negative pressure in said drum (4) on the feed side of said drum, and a sensor (43) sensing the pressure in said drum (4) on said feed side corrects said measurement value indicator (35) in correspondence with the pressure.

**Revendications**

1. Dispositif pour réaliser une mesure pondérale dans des centrifugeuses pour séparer des suspensions en leurs composantes solides et liquides, comportant un boîtier de machine, un tambour recevant la suspension et monté en rotation dans le boîtier de machine, et un tube de remplissage menant dans le tambour pour alimenter la suspension dans le tambour, dans lequel le boîtier de machine est monté mobile en basculement autour d'un axe de rotation, et un élément de mesure de force palpe des déviations, se produisant autour de l'axe de rotation, du boîtier de machine dépendantes du poids, dues à des degrés de remplissage de suspension différents du tambour ou à des déshumidifications différentes des composantes solides de la suspension, déviations qui sont affichées sur un affichage de valeurs mesurées, **caractérisé en ce que** le tambour peut être refermé par un couvercle, **en ce qu'**il est prévu une conduite (10, tube de remplissage 11) pour générer une surpression ou une dépression dans le tambour (4), et **en ce que** la ligne d'action (50) de la force ($P_1$) générée dans cette conduite (10, tube de remplissage 11) en raison de la surpression ou de la dépression est guidée de manière à recouper l'axe de rotation (14) du boîtier de machine (2).

2. Dispositif pour réaliser une mesure pondérale dans des centrifugeuses pour séparer des suspensions en leurs composantes solides et liquides, comportant un boîtier de machine, un tambour recevant la suspension et monté en rotation dans le boîtier de machine, et un tube de remplissage menant dans le tambour pour alimenter la suspension dans le tambour, dans lequel le boîtier de machine est monté mobile en basculement autour d'un axe de rotation, et un élément de mesure de force palpe des déviations, se produisant autour de l'axe de rotation, du boîtier de machine dépendantes du poids, dues à des degrés de remplissage de suspension différents du tambour ou à des déshumidifications différentes des composantes solides de la suspension, déviations qui sont affichées sur un affichage de valeurs mesurées, **caractérisé en ce que** le tambour peut être refermé par un couvercle, **en ce qu'**il est prévu une conduite (10, tube de remplissage 11) pour générer une surpression ou une dépression dans le tambour (4) sur le côté alimentation du tambour, et **en ce qu'**un détecteur (43) palpant du côté alimentation la pression dans le tambour (4) corrige l'affichage de la valeur mesurée (35) en fonction de la pression.

**Fig. 1**

Fig. 2

Fig. 3

Fig. 4

Fig. 5